# EUROPÄISCHE PATENTSCHRIFT

(11) **EP 1 893 441 B1**
(45) Veröffentlichungstag und Bekanntmachung des Hinweises auf die Patenterteilung: **05.10.2011**
(21) Anmeldenummer: 06724216.4
(22) Anmeldetag: 11.04.2006
(51) Int. Cl.: B60Q 1/32, B60Q 3/02

(54) **BELEUCHTUNGSEINRICHTUNG FÜR FAHRZEUGTÜR**
LIGHTING DEVICE FOR A MOTOR VEHICLE DOOR
SYSTEME D'ECLAIRAGE POUR PORTIERE DE VEHICULE

(30) Priorität: 09.06.2005 DE 102005026807
(43) Veröffentlichungstag der Anmeldung: 05.03.2008
(73) Patentinhaber: Johnson Controls GmbH, 51399 Burscheid (DE)
(72) Erfinder: MÜLLER, Wolfgang, 42929 Wermelskirchen (DE); LACKMANN, Kay, 45141 Essen (DE)
(74) Vertreter: Polypatent
(86) Internationale Anmeldenummer: PCT/EP2006/003286
(87) Internationale Veröffentlichungsnummer: WO 2007/025574

(56) Entgegenhaltungen:
- WO-A-2005/047035
- DE-A1- 10 144 344
- DE-A1- 19 524 602
- DE-A1- 19 606 540
- US-A- 5 647 657
- US-B1- 6 536 928
- PATENT ABSTRACTS OF JAPAN Bd. 2003, Nr. 11, 5. November 2003 (2003-11-05) -& JP 2003 212038 A (TOYODA GOSEI CO LTD), 30. Juli 2003 (2003-07-30)
- PATENT ABSTRACTS OF JAPAN Bd. 2000, Nr. 21, 3. August 2001 (2001-08-03) & JP 2001 113945 A (T S TEC KK), 24. April 2001 (2001-04-24)

## Beschreibung

Die Erfindung betrifft eine Beleuchtungseinrichtung für ein türinnenseitiges Verkleidungselement eines Kraftfahrzeugs, welche bei geöffneter Fahrzeugtür zur Abgabe eines Lichts in einer ersten Farbe und/oder Intensität geeignet ist, sowie ein damit ausgestattetes Verkleidungsteil und/oder Kraftfahrzeug.

### Stand der Technik

Aus der US 6,536,928 ist eine Beleuchtungseinrichtung bekannt, die zwei verschiedene Zustände des zugehörigen Fahrzeugs erkennen kann und in Abhängigkeit des erkannten Zustands ein Licht erster oder zweiter Farbe abstrahlt. Zum Erkennen des Zustands des Fahrzeugs dient beispielsweise ein Türkontakt, wobei bei geöffneter Tür ein Licht erster Farbe, vorzugsweise einer Signalfarbe, und bei geschlossener Tür ein Licht zweiter Farbe, beispielsweise als Hintergrundbeleuchtung von der Beleuchtungseinrichtung abgestrahlt wird.

Das Dokument DE 101 44 344 A1 betrifft eine Innenverkleidung, mit einer Abdeckung, die mindestens eine Aussparung aufweist und auf einem Aggregateträger vormontiert ist und mit mindestens einer die Aussparung formschlüssig abschließende Funktionseinheit, die lösbar.an der Innenverkleidung und/oder dem Aggregateträger befestigt ist. Dabei kann beispielsweise die Funktionseinheit zur Abgabe eines Lichts ausgebildet sein.

Eine gattungsgemäße Beleuchtungseinrichtung ist aus der Druckschrift DE 198 22 636 A1 bekannt. Sie besteht aus einem lichtdurchlässigen Bereich in der dem Fahrzeuginnenraum zugewandten Flächenseite der Türverkleidung, der mittels rückseitig angeordneter Leuchtdioden (LED) durchleuchtbar ist. Beim Öffnen der Fahrzeugtür werden die Leuchtmittel aktiviert und strahlen ein bei geöffneter Tür für den vorbeifließenden Verkehr sichtbares Warnlicht ab. Dieses Warnlicht kann ein Dauerlicht oder periodisch blinkendes rotes Licht sein. Zusätzlich kann bei geöffneter Tür ein den Boden neben dem Fahrzeug ausleuchtendes Licht abgestrahlt werden.

Beim Schließen der Fahrzeugtür erlischt das Licht. Da das Oberflächendekor des durchleuchtbaren Bereichs der Türverkleidung dem Dekor dem übrigen Dekor der Türverkleidung entspricht, ist die Beleuchtungseinrichtung bei geschlossener Fahrzeugtür für die Fahrzeuginsassen nicht mehr sichtbar.

### Aufgabe

Der Erfindung liegt die Aufgabe zugrunde, eine Beleuchtungseinrichtung bereitzustellen, die sowohl eine Warnfunktion aufweist als auch zur Ausleuchtung des Fahrzeuginnenraums geeignet ist.

### Lösung

Die Aufgabe wird bei einer gattungsgemäßen Beleuchtungseinrichtung dadurch gelöst, dass die Beleuchtungseinrichtung bei nur unvollständig geschlossener Fahrzeugtür ein Licht in einer dritte Farbe und/oder Intensität abstrahlt. Die erste Farbe weist dabei vorzugsweise einen im Wesentlichen roten Farbeindruck bei hoher Intensität, die zweite Farbe einen im Wesentlichen weißen Farbeindruck und eine niedrige Intensität auf.

Intensität und/oder Farbe des abgestrahlten Lichts sind also in Abhängigkeit vom Öffnungszustand der Tür schaltbar, so dass mittels der gleichen Beleuchtungseinrichtung sowohl vor der geöffneten Tür gewarnt als auch ein den Fahrzeuginnenraum erhellendes Licht bereitgestellt wird.

Die Beleuchtungseinrichtung strahlt bei nur unvollständig geschlossener Fahrzeugtür ein Licht in der ersten oder einer dritten Farbe und/oder Intensität ab, wobei auch eine hinsichtlich Farbe und/oder Intensität vorzugsweise periodische Abstrahlung vorgesehen werden kann. Selbst wenn das betreffende Fahrzeug mit einer zentralen Einrichtung zur Anzeige des Schließzustands ausgestattet ist, kann durch diese Ausbildung die mangelhaft verriegelte Tür unmittelbar lokalisiert werden. Dies ist auch Personen möglich, denen der Blick auf die üblicherweise im Cockpit angeordnete zentrale Anzeigeeinrichtung verwehrt ist.

Nach einer besonderen Ausführung der Erfindung umfasst die Beleuchtungseinrichtung einen zur Abgabe von Licht geeigneten Lichtleiter, der vorzugsweise auf die innenraumseitige Oberfläche des Verkleidungselements aufgebracht, insbesondere aufgeklebt ist, wobei sich mindestens ein mit einem Leuchtmittel in Wirkung stehendes Ende des Lichtleiters bis auf die vom Innenraum abgewandte Rückseite des Verkleidungselements erstreckt. Derartige Beleuchtungseinrichtungen weisen eine besonders elegante Anmutung auf.

Alternativ ist denkbar, dass die Beleuchtungseinrichtung einen durchleuchtbaren Oberflächenbereich des Verkleidungselements umfasst, welcher mittels mindestens eines auf der vom Innenraum abgewandten Rückseite des Verkleidungsteils angeordneten Leuchtmittels durchleuchtbar ist.

Dabei stehen der Lichtleiter oder der durchleuchtbare Oberflächenbereich bevorzugt mit mindestens zwei Leuchtmitteln unterschiedlicher Farbe oder mit mindestens einem zur wahlweisen Erzeugung von Licht verschiedener Farbe geeigneten Leuchtmittel in Wirkung. Geeignete Leuchtmittel sind beispielsweise Leuchtdioden (LED).

Ferner kann vorgesehen werden, dass die Lichtabstrahlung durch ein an der innenraumseitigen Oberfläche des Verkleidungselements angeordnetes Leuchtmittel erfolgt, welches zur wahlweisen Erzeugung von Licht verschiedener Farbe geeignet ist. Hierzu bieten sich beispielsweise sogenannte OLEDs (Organic Light Emitting Diode) an.

### Figuren

Die Figuren stellen beispielhaft und schematisch verschiedene Ausführungen der Erfindung dar.

Es zeigen:
- Fig. 1: eine Aufsicht auf ein mit einer erfindungsgemäßen Beleuchtungseinrichtung ausgestattetes Kraftfahrzeug,
- Fig. 2: eine innenraumseitige Ansicht einer Türverkleidung aus dem Kraftfahrzeug nach Fig. 1,
- Fig. 3: eine Türverkleidung mit einer anderen erfindungsgemäßen Beleuchtungseinrichtung.

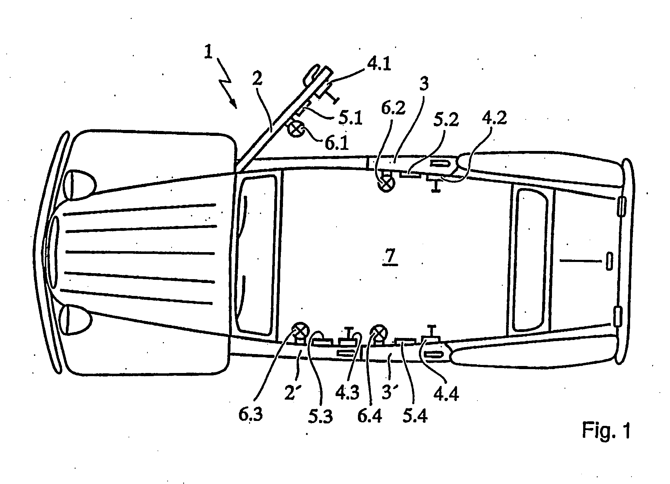

Das in Fig. 1 gezeigte Kraftfahrzeug 1 ist viertürig ausgeführt, also auf jeder Fahrzeugseite mit einer vorderen Seitentür 2, 2' und einer hinteren Seitentür 3, 3' versehen. Im Ausführungsbeispiel ist die rechte vordere Seitentür 2 geöffnet, während die übrigen Seitentüren 2', 3, 3' geschlossen sind. Der Verschluss der rechten hinteren Seitentür 3 soll dabei unvollständig sein, das zugehörige Türschloss ist somit noch nicht vollständig verriegelt.

Jede Seitentür 2, 2', 3, 3' wirkt in Abhängigkeit von ihrer Stellung auf einen Schalter 4.1 bis 4.4 ein, der drei unterschiedliche Schaltstellungen aufweist (geöffneter, unvollständig geschlossener, vollständig geschlossener Zustand). Jeder Schalter 4.1 bis 4.4 steht mit einer türseitigen Steuereinrichtung 5.1 bis 5.4 in Verbindung, mittels derer das betreffende Leuchtmittel 6.1 bis 6.4 in der zugewiesenen Farbe und Intensität aktivierbar ist.

Da die rechte Seitentür 2 geöffnet ist, erhält das betreffende Leuchtmittel 6.1 von der Steuereinrichtung 5.1 den Befehl, ein rotes Warnlicht hoher Intensität abzustrahlen, welches außerhalb des Fahrzeuginnenraums 7 sichtbar ist. Bei den vollständig geschlossenen Seitentüren der linken Fahrzeugseite leuchten die Leuchtmittel 6.3 und 6.4 hingegen in weißer Farbe bei niedriger Intensität und erzeugen im Fahrzeuginnenraum 7 ein diffuses, auch während der Fahrt angenehmes Hintergrundlicht ("Ambient Light"). Durch den Schalter 4.2 wird erkannt, dass die hintere rechte Seitentür 3 nicht vollständig verriegelt ist. Die Steuereinrichtung 5.2 aktiviert das zugeordnete Leuchtmittel 6.2 dahingehend, dass periodisch wechselnd ein gelbes Licht hoher Intensität und ein rotes Licht niedriger Intensität zum Fahrzeuginnenraum 7 hin abgestrahlt werden.

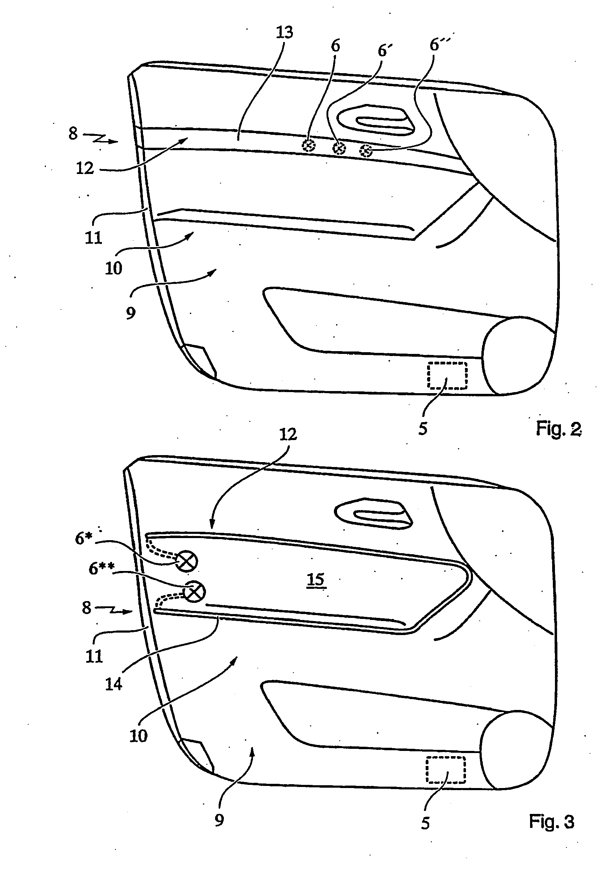

Das in Fig. 2 dargestellte türinnenseitige, also bei geschlossener Seitentür 2, 2', 3, 3' dem Fahrzeuginnenraum 7 zugewandte Verkleidungselement 8 weist eine innenraumseitige Oberfläche 9 auf, die im Ausführungsbeispiel neben der Flächenseite 10 auch die hintere, in eingebautem Zustand sichtbare Kantenfläche 11 des Verkleidungselements 8 umfasst. Das Verkleidungsteil 8 ist mit einer Beleuchtungseinrichtung 12 versehen, die aus einer transluzenten, sich partiell über die Flächenseite 10 wie die hintere Kantenfläche 11 erstreckenden Zierleiste 13 und einem rückseitig derselben angeordneten ersten Leuchtmittel 6 (Farbe Rot), einem zweiten Leuchtmittel 6' (Farbe Weiß) und einem dritten Leuchtmittel 6" (Farbe Gelb) besteht. Auf der Rückseite des Verkleidungselements ist ferner die Steuereinrichtung 5 (Türsteuergerät) befestigt, mittels derer alle Funktionen der betreffenden Fahrzeugtür gesteuert werden (Beleuchtung, Fensterheber, Verstellung/Beheizung Außenspiegel u. dgl.).

Bei dem Ausführungsbeispiel nach Fig. 3 ist ein lichtemittierender Lichtleiter 14 um ein zentrales Feld 15 des Verkleidungselements 8 herum auf die Flächenseite 10 aufgeklebt. Die Enden des Lichtleiters 14 sind durch das Verkleidungselement 8 hindurch bis auf dessen Rückseite geführt und an zwei polychrome (multi-color) Leuchtmittel 6*, 6** angekoppelt, welche zur wahlweisen Abstrahlung von Licht unterschiedlicher Farbe geeignet sind. Durch die Einspeisung des Lichts an beiden Enden des Lichtleiters 14 wird, über die Längserstreckung des Lichtleiters 14 betrachtet, eine relativ gleichmäßige Leuchtstärke erzeugt.

### Bezugszeichen

- 1: Kraftfahrzeug
- 2, 2': Seitentür (vorne)
- 3, 3': Seitentür (hinten)
- 4.1 bis 4.4: Schalter
- 5.1 bis 5.4: Steuereinrichtung
- 6, 6.1 bis 6.4: Leuchtmittel
- 6', 6", 6"': Leuchtmittel (monochrom)
- 6*, 6**: Leuchtmittel (polychrom)
- 7: Fahrzeuginnenraum
- 8: Verkleidungselement
- 9: Oberfläche
- 10: Flächenseite
- 11.: Kantenfläche
- 12: Beleuchtungseinrichtung
- 13: Zierleiste
- 14: Lichtleiter
- 15: zentrales Feld (des Verkleidungselements).

## Patentansprüche

1. Beleuchtungseinrichtung (12) für ein türinnenseitiges Verkleidungselement (8) eines Kraftfahrzeugs (1), umfassend wenigstens ein Leuchtmittel (6) und eine Steuereinrichtung (5), mittels derer das Leuchtmittel (6) derart aktivierbar ist, dass die Beleuchtungseinrichtung (12) bei geöffneter Fahrzeugtür (2,2',3,3') ein Licht in einer Farbe und/oder Intensität abstrahlt und bei geschlossener Fahrzeugtür (2,2'3,3') ein Licht einer zweiten, anderen Farbe und/oder Intensität abstrahlt, **dadurch gekennzeichnet, dass** die Beleuchtungseinrichtung (12) bei nur unvollständig geschlossener Fahrzeugtür (2,2',3,3') ein Licht in einer dritten Farbe und/oder Intensität abstrahlt.

2. Beleuchtungseinrichtung nach Anspruch 1, **dadurch gekennzeichnet, dass** die erste Farbe einen im Wesentlichen roten Farbeindruck und/oder eine hohe Intensität aufweist.

3. Beleuchtungseinrichtung nach Anspruch 2, **dadurch gekennzeichnet, dass** die zweite, andere Farbe einen im Wesentlichen weißen Farbeindruck und/oder eine niedrige Intensität aufweist.

4. Beleuchtungseinrichtung nach einem der vorhergehenden Ansprüche, **dadurch gekennzeichnet, dass** die Beleuchtungseinrichtung (12) bei nur unvollständig geschlossener Fahrzeugtür ein hinsichtlich Farbe und/oder Intensität vorzugsweise periodisch wechselndes Licht abstrahlt.

5. Beleuchtungseinrichtung nach einem der vorhergehenden Ansprüche, **dadurch gekennzeichnet, dass** die Beleuchtungseinrichtung (12) einen zur Abgabe von Licht geeigneten Lichtleiter (14) umfasst.

6. Beleuchtungseinrichtung nach Anspruch 5, **dadurch gekennzeichnet, dass** der Lichtleiter (14) auf die innenraumseitige Oberfläche (9) des Verkleidungselements (8) aufgebracht, insbesondere aufgeklebt ist, wobei sich mindestens ein mit einem Leuchtmittel (6) in Wirkung stehendes Ende des Lichtleiters bis auf die vom Innenraum abgewandte Rückseite des Verkleidungselements erstreckt.

7. Beleuchtungseinrichtung nach einem der Ansprüche 1 bis 4, **dadurch gekennzeichnet, dass** die Beleuchtungseinrichtung (12) einen durchleuchtbaren Oberflächenbereich des Verkleidungselements umfasst, welcher mittels mindestens eines auf der vom Innenraum abgewandten Rückseite des Verkleidungsteils (8) angeordneten Leuchtmittels (6) durchleuchtbar ist.

8. Beleuchtungseinrichtung nach einem der Ansprüche 5 bis 7, **dadurch gekennzeichnet, dass** der Lichtleiter (14) oder der durchleuchtbare Oberflächenbereich mit mindestens zwei Leuchtmitteln (6', 6", 6"') unterschiedlicher Farbe oder mit mindestens einem zur wahlweisen Erzeugung von Licht verschiedener Farbe geeigneten Leuchtmitteln (6*, 6**) in Wirkung steht.

9. Beleuchtungseinrichtung nach Anspruch 5, **dadurch gekennzeichnet, dass** mindestens ein Leuchtmittel (6) als Leuchtdiode (LED) ausgebildet ist.

10. Beleuchtungseinrichtung nach einem der Ansprüche 1 bis 4, **dadurch gekennzeichnet, dass** die Lichtabstrahlung unmittelbar durch ein an der innenraumseitigen Oberfläche (9) des Verkleidungselements (8) angeordnetes Leuchtmittel (6) erfolgt, welches zur wahlweisen Erzeugung von Licht verschiedener Farbe geeignet ist.

11. Beleuchtungseinrichtung nach Anspruch 10, **dadurch gekennzeichnet, dass** das Leuchtmittel (6) als OLED ausgebildet ist.

12. Türinnenseitiges Verkleidungselement (8) oder Kraftfahrzeug (1) mit einer Beleuchtungseinrichtung (12) nach einem der vorhergehenden Ansprüche.

## Claims

1. Lighting device (12) for a lining element (8), on the inside of a door, of a motor vehicle (1), comprising at least one lighting means (6) and a control device (5) by means of which the lighting means (6) can be activated in such a way that when a vehicle door (2, 2', 3, 3') is open the lighting device (12) emits light of one colour and/or intensity, and when the vehicle door (2, 2', 3, 3') is closed, emits light of a second, different colour and/or intensity, **characterized in that** when a vehicle door (2, 2', 3, 3') is only incompletely closed the lighting device (12) emits a light of a third colour and/or intensity.

2. Lighting device according to Claim 1, **characterized in that** the first colour has a substantially red colour impression and/or a high intensity.

3. Lighting device according to Claim 2, **characterized in that** the second, different colour has a substantially white colour impression and/or a low intensity.

4. Lighting device according to one of the preceding claims, **characterized in that** when a vehicle door which is only incompletely closed the lighting device (12) emits a light which preferably changes periodically with regard to colour and/or intensity.

5. Lighting device according to one of the preceding claims, **characterized in that** the lighting device (12) comprises a light guide (14) suitable for outputting light.

6. Lighting device according to Claim 5, **characterized in that** the light guide (14) is glued to, in particular onto, the inside surface (9) of the lining element (8), at least one end, acting together with a lighting means (6), of the light guide extending as far as the rear side of the lining element, which is averted from the interior.

7. Lighting device according to one of Claims 1 to 4, **characterized in that** the lighting device (12) comprises a transilluminable surface region of the lining element which can be transilluminated by means of at least one lighting means (6) arranged on the rear side, averted from the interior, of the lining element (8).

8. Lighting device according to one of Claims 5 to 7, **characterized in that** the light guide (14) or the transilluminable surface region acts together with at least two lighting means (6', 6'', 6"') of different colour, or together with at least one lighting means (6*, 6**) suitable for selectively producing light of different colour.

9. Lighting device according to Claim 5, **characterized in that** at least one lighting means (6) is designed as a light-emitting diode (LED).

10. Lighting device according to one of Claims 1 to 4, **characterized in that** the light is emitted directly by a lighting means (6), which is arranged on the inside surface (9) of the lining element (8) and is suitable for selectively producing light of different colour.

11. Lighting device according to Claim 10, **characterized in that** the lighting means (6) is designed as an OLED.

12. Lining element (8) on the inside of a door, or a motor vehicle (1), having a lighting device (12) according to one of the preceding claims.

## Revendications

1. Système d'éclairage (12) pour un élément d'habillage (8) du côté intérieur de la portière d'un véhicule automobile (1), comportant au moins un élément lumineux (6) et un dispositif de commande (5), par lequel l'élément lumineux (6) peut être activé de telle sorte que le système d'éclairage (12), lorsque la portière (2, 2', 3, 3') est ouverte, émet une lumière dans une couleur et/ou une intensité et, lorsque la portière (2, 2', 3, 3') est fermée, émet une lumière d'une deuxième couleur et/ou intensité différentes, **caractérisé en ce que** le système d'éclairage (12) émet une lumière dans une troisième couleur et/ou intensité lorsque la portière (2, 2', 3, 3') est seulement incomplètement fermée.

2. Système d'éclairage selon la revendication 1, **caractérisé en ce que** la première couleur possède un effet de couleur sensiblement rouge et/ou une intensité élevée.

3. Système d'éclairage selon la revendication 2, **caractérisé en ce que** la deuxième couleur différente possède un effet de couleur sensiblement blanche et/ou une faible intensité.

4. Système d'éclairage selon l'une quelconque des revendications précédentes, **caractérisé en ce que** le système d'éclairage (12), lorsque la portière est seulement incomplètement fermée, émet une lumière changeante, de préférence périodiquement, en couleur et/ou en intensité.

5. Système d'éclairage selon l'une quelconque des revendications précédentes, **caractérisé en ce que** le système d'éclairage (12) comprend un conducteur optique (14) apte à transmettre la lumière.

6. Système d'éclairage selon la revendication 5, **caractérisé en ce que** le conducteur optique (14) est posé, en particulier est collé, sur la surface (9), du côté habitacle, de l'élément d'habillage (8), au moins une extrémité du conducteur optique, laquelle coopère avec un élément lumineux (6), s'étendant jusque sur la face arrière, opposée à l'habitacle, de l'élément d'habillage.

7. Système d'éclairage selon l'une quelconque des revendications 1 à 4, **caractérisé en ce que** le système d'éclairage (12) comprend une zone superficielle, laissant passer la lumière, de l'élément d'habillage, à travers laquelle peut passer la lumière d'au moins un élément lumineux (6), disposé sur la face arrière de l'élément d'habillage (8), opposée à l'habitacle.

8. Système d'éclairage selon l'une quelconque des revendications 5 à 7, **caractérisé en ce que** le conducteur optique (14) ou la zone superficielle laissant passer la lumière coopère avec au moins deux éléments lumineux (6', 6", 6"') de couleur différente ou avec au moins un élément lumineux (6*, 6**), apte à générer une lumière de différentes couleurs.

9. Système d'éclairage selon la revendication 5, **caractérisé en ce qu'**au moins un élément lumineux (6) est réalisé sous la forme d'une diode électroluminescente (LED).

10. Système d'éclairage selon l'une quelconque des revendications 1 à 4, **caractérisé en ce que** la lumière est émise directement par un élément lumineux (6), qui est disposé sur une surface (9), du côté habitacle, de l'élément d'habillage (8) et qui est apte à générer au choix une lumière de couleur différente.

11. Système d'éclairage selon la revendication 10, **caractérisé en ce que** l'élément lumineux (6) est réalisé sous la forme d'une diode électroluminescente organique (OLED).

12. Élément d'habillage (8) du côté intérieur d'une portière ou véhicule automobile (1) comportant un système d'éclairage (12) selon l'une quelconque des revendications précédentes.
